# EUROPEAN PATENT SPECIFICATION

(11) **EP 1 911 344 B1**
(45) Date of publication and mention of the grant of the patent: **22.08.2012**
(21) Application number: 07019724.9
(22) Date of filing: 09.10.2007
(51) Int. Cl.: A01G 3/053

(54) **Structure for attaching chip receiver to hedge trimmer**
Struktur zur Anbringung eines Span-Empfängers an einer Heckenschere
Structure de fixation d'un récepteur de copeaux pour taille-haie

(30) Priority: 12.10.2006 JP 2006279030; 20.12.2006 JP 2006343159
(43) Date of publication of application: 16.04.2008
(73) Proprietor: Makita Corporation, Anjo-shi, Aichi (JP)
(72) Inventor: Kondo, Masaki, Anjo-shi, Aichi (JP); Tsuchiya, Tadayoshi, Anjo-shi, Aichi (JP); Nashimoto, Tomonobu, Anjo-shi, Aichi (JP)
(74) Representative: Kramer - Barske - Schmidtchen

(56) References cited:
- BE-A6- 1 015 511
- FR-A- 2 494 551
- GB-A- 2 219 721
- GB-A- 2 236 937

## Description

### BACKGROUND

The present invention relates to a structure for attaching a chip receiver to a hedge trimmer.

GB 2 236 937 A discloses a collection device for grass or hedge clippings.

In a hedge trimmer, a retaining board, and a blade section having a pair of movable blades which reciprocate back and forth below the retaining board are provided in a manner of projecting forward from a main body, so that twigs and leaves can be cropped by reciprocating the movable blades in opposite directions to each other. When an upper face of the hedge is trimmed with this hedge trimmer, in order that the twigs and leaves which have been cropped can be received and gathered immediately, it is often conducted to attach a chip receiver along the retaining board. As an attaching structure of this chip receiver, Japanese Patent Publication No. 2003-111520A discloses a structure for enabling the chip receiver to be easily attached, by inserting a fixing screw which is provided so as to extend upward from the retaining board into a fixing slot hole which is provided in the chip receiver, and by screwing a knob nut over the fixing screw.

However, in the attaching structure of the chip receiver as described above, it is necessary to take trouble to rotate the knob nut every time when the chip receiver is attached or detached. Moreover, there is such anxiety that the knob nut may be lost, after the chip receiver is detached, and there is a problem in usability.

### SUMMARY

It is therefore an object of the invention to provide a structure for attaching a chip receiver to a hedge trimmer which is excellent in usability, because attaching and detaching operation of the chip receiver to a blade section of the hedge trimmer can be easily conducted, and there is no anxiety of losing components.

The above object is achieved by providing a structure for mounting a chip receiver to a blade section according to claim 1.

With the above configurations, since the chip receiver can be attached to or detached from the retaining board by the simple operation of the clip, it is excellent in usability. In addition, there is no anxiety of losing components. Especially, since the clip is mounted on the retaining board by clamping the side faces of the retaining board, the chip receiver can be attached on the retaining board irrespective of the peripheral structure of the blade section. Thus, the chip receiver can be mounted with respect to various types of hedge trimmers.

At least one of the retaining board and the clamping members may be provided with at least one chamfered face adapted to assist an elastic deformation of the at least one of the clamping members in such a direction that the distance is enlarged.

In this case, it is not necessary to actuate the clip to enlarge the distance. Thus, the attachment operation can be further facilitated.

At least one metal wire having a plurality of bent parts may constitute the clamping members.

In this case, the clip can be prepared at low cost.

The structure may further comprise a lever, engaged with one of the bent parts and adapted to be operated to elastically deform the one of the clamping members to vary the distance.

In this case, the elastic deformation of the clamping member can be easily performed with less force.

The lever may be movable between a first position and a second position, and is adapted to be statically placed in either the first position or the second position. The distance between the clamping members may be a first distance adapted to clamp the retaining board when the lever is placed in the first position. The distance between the clamping members may be a second distance allowing an attachment or detachment of the clip with respect to the retaining board.

### BRIEF DESCIPTION OF THE DRAWINGS

Fig. 1 is a perspective view of a hedge trimmer showing a state that a chip receiver according to one embodiment of the invention is attached.
Fig. 2 is a perspective view showing a disassembled state of the chip receiver of Fig. 1.
Fig. 3 is a section view showing a structure for attaching the chip receiver of Fig. 1 to the hedge trimmer.
Fig. 4 is a perspective view of the hedge trimmer showing a state that the chip receiver is attached to an opposite side to Fig. 1.
Fig. 5A is a top plan view showing a chip receiver according to a second embodiment of the invention.
Fig. 5B is a side view showing the chip receiver of Fig. 5A.
Fig. 5C is a bottom plan view showing the chip receiver of Fig. 5A.
Fig. 6A is a section view taken along a line A-A in Fig. 5A.
Fig. 6B is a section view taken along a line B-B in Fig. 5A.
Fig. 7 is a perspective view showing a disassembled state of the chip receiver of Fig. 5A.
Fig. 8A is a top plan view of a clip of a chip receiver according to a third embodiment of the invention.
Fig. 8B is a side view of the clip of Fig. 8A.
Fig. 8C is a section view of the clip of Fig. 8A.
Fig. 8D is a section view of the clip of Fig. 8A.
Fig. 9A is a top plan view of a clip of a chip receiver according to a fourth embodiment of the invention, showing a state that an operating lever is in a normal position.
Fig. 9B is a section view taken along a line C-C in Fig. 9A.
Fig. 9C is a section view taken along a line D-D in Fig. 9A.
Fig. 9D is a section view taken along a line E-E in Fig. 9A.
Fig. 10A is a section view taken along a line F-F in Fig. 9B.
Fig. 10B is a section view taken along a line G-G in Fig. 9B.
Fig. 11 is a section view taken along the line C-C in Fig. 9A, showing a state that the operating lever is in an attaching/detaching position.

### DETAILED DESCRIPTION OF THE EXEMPLARY EMBODIMENTS.

Exemplary embodiments of the invention will be described below in detail with reference to the accompanying drawings.

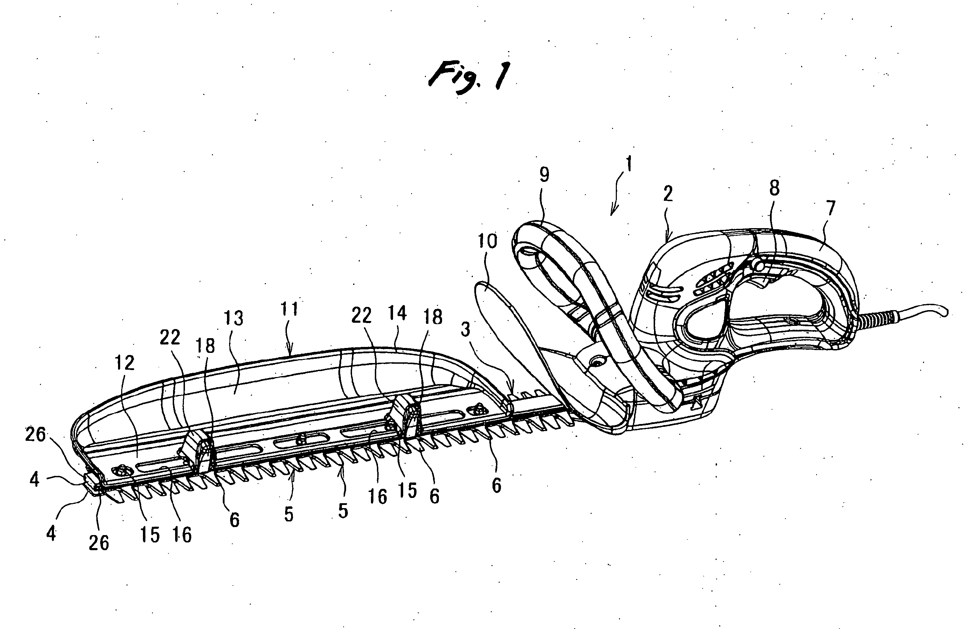

As shown in Fig. 1, a hedge trimmer 1 includes a main body 2 in which a motor and a crank mechanism for converting rotation of the motor to a linear movement, which are not shown, are incorporated, and a blade section 3 which is projected forward (to a left side in Fig. 1) from the main body 2 and adapted to be moved by the crank mechanism. This blade section 3 includes band-shaped upper and lower retaining boards 4, and two movable blades 5 which are positioned between the two retaining boards 4 and provided with edges 6 on both side edges thereof in a staggered manner. When the movable blades 5 are moved back and forth in opposite directions to each other by the crank mechanism, it is possible to crop twigs and leaves with the edges 6. Denoted with numeral 7 is a main handle provided with a trigger switch 8. Denoted with numeral 9 is an auxiliary handle which is projected diagonally forward from the main body 2. Denoted with numeral 10 is a protector.

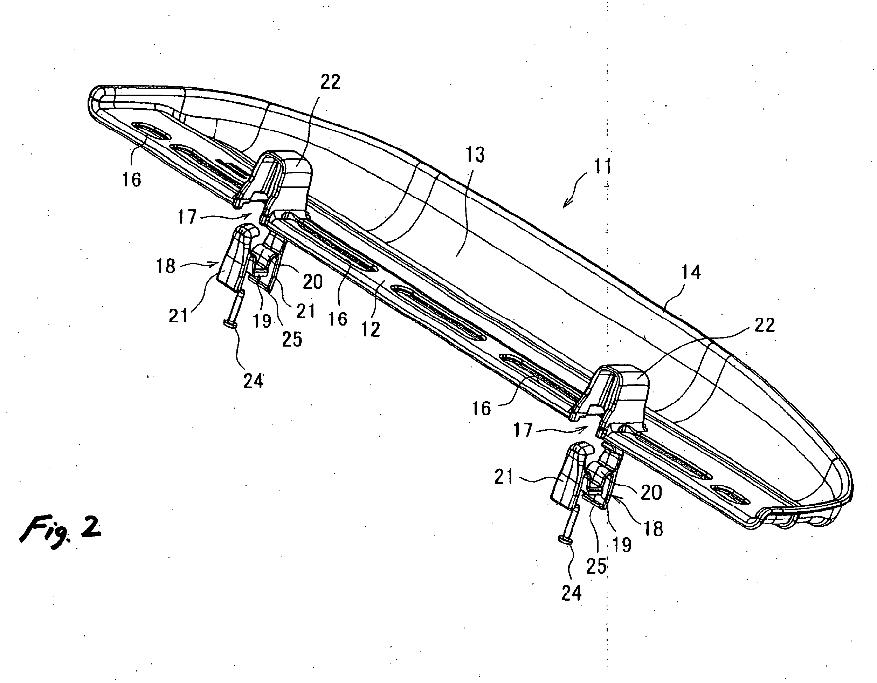

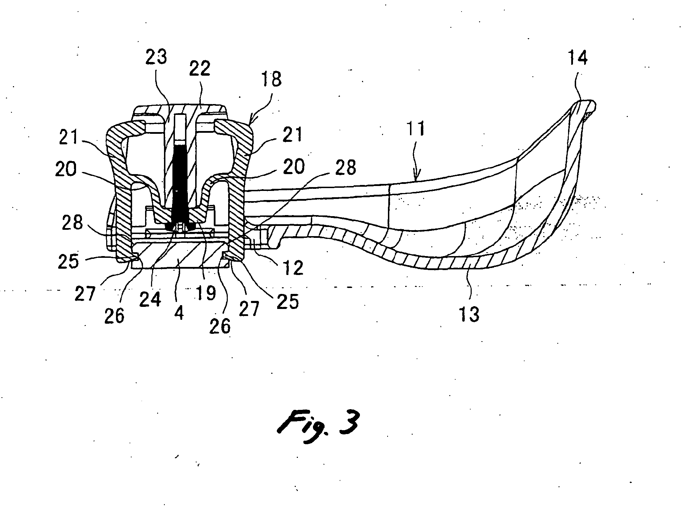

As also shown in Figs. 2 and 3, the chip receiver 11 includes a plate-shaped attaching part 12 which is attached to an upper face of the upper retaining board 4 in the blade section 3 of the hedge trimmer 1, and a bowl-shaped receiving part 13 which is continued from one side edge of the attaching part 12. The receiving part 13 is formed in a deep bottomed shape having a bottom positioned lower than the attaching part 12, so that the twigs and leaves which have been cropped may not overflow and catchability may be enhanced. In addition, a wall 14 which is continued from front and back ends of the attaching part 12 is uprightly formed on an outer periphery of the receiving part 13. A lower face of the receiving part 13 is set so as not to be lower than a lower face of the blade section 3, so that the receiving part 13 may not disturb cropping work, when the chip receiver 11 is attached to the blade section 3.

Moreover, the attaching part 12 is provided with a plurality of relief slots 16 for avoiding interferences with the fixing screws 15 of the blade section 3, extending in parallel to a longitudinal direction of the blade section 3. A pair of grooves 17 are formed at two positions between the relief slots 16, so as to extend from the side edge of the attaching part 12 on an opposite side to the receiving part 13 substantially at the right angle with the attaching part 12, and clips 18 are respectively provided inside the grooves 17.

Each of the clips 18 is a molded product of synthetic resin having a pair of locking pieces 21 which are connected by elastic pieces 20, on both sides of a center plate 19. The clip 18 is contained in a holder 22 which is formed so as to project upward by connecting front and back edges of the groove 17, and has an inverted U-shape in cross section. The center plate 19 is fixed with a screw 24 to a boss 23 which is projected downward from a center of an inner face of the holder 22, whereby the clip 18 is held in a state where the locking pieces 21 are exposed from both sides of the holder 22.

The clip 18 is further provided with locking hooks 25 at lower ends of the locking pieces 21 on their faces opposed to each other. The locking hooks 25 are adapted to be engaged with locking grooves 26 which are formed on both side faces of the upper retaining board 4 of the hedge trimmer 1 along an entire length thereof.

In a state where the locking hooks 25 are not engaged with the locking grooves 26, the clip 18 is maintained in a state in which a distance between the locking hooks 25 is made rather smaller than a width of the retaining board 4 by the elastic pieces 20. When the locking pieces 21 are moved close to each other, by nipping upper ends of the locking pieces 21 with fingers, the lower ends of the locking pieces 21 will be spread against urges of the elastic pieces 20. The locking pieces 21 are respectively provided, on their lower end faces, with chamfered parts 27 which are inclined upward in a direction toward distal ends of the locking hooks 25. When the clip 18 is brought into contact with the retaining board 4, the lower ends of the locking pieces 21 are guided by the chamfered parts 27 to spread. In this embodiment, chamfered parts 28 for guiding the locking pieces 21 to spread are also provided in corner parts of the retaining board 4.

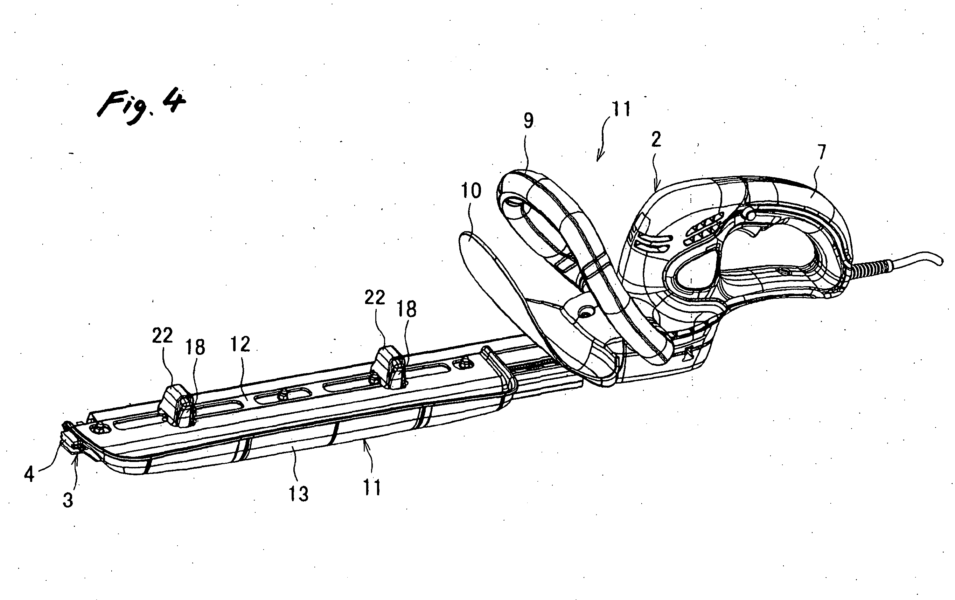

In order to attach the chip receiver 11 having the above described structure to the hedge trimmer, the locking pieces 21 of the front and rear clips 18 are pushed downward in a state where the lower ends of the locking pieces 21 are respectively butted against the right and left side edges of the retaining board 4. Then, the lower ends of the locking pieces 21 spread by the guides of the chamfered parts 27, 28 thereby to allow intrusion of the retaining board 4 between the locking hooks 25. When the locking hooks 25 arrive the locking grooves 26, the locking hooks 25 are urged close to each other and engaged with the locking grooves 26, as shown in Fig. 3. As a results, the chip receiver 11 can be attached to the retaining board 4 in such a manner that the retaining board 4 is clamped with the front and rear clips 18. It is to be noted that the chip receiver 11 can be attached in a reverse direction as shown in Fig. 4, because of the structure of clamping the retaining board 4 in this manner.

On the other hand, in order to detach the chip receiver 11, the upper ends of the locking pieces 21 of the clip 18 are nipped with fingers from both sides. Then, the lower ends of the locking pieces 21 are spread allowing the locking hooks 25 to be disengaged from the locking grooves 26, whereby the chip receiver 11 can be detached.

According to the attaching structure of the chip receiver 11 in the above described embodiment, the locking grooves 26 are respectively formed on the right and left side faces of the retaining board 4, while the clips 18 of which the lower ends can be elastically engaged with the locking grooves 26 of the retaining board 4 and can be spread as desired are provided on the attaching part 12 of the chip receiver 11, whereby the chip receiver 11 can be attached to the blade section 3 by clamping the retaining board 4 with the clips 18. Therefore, the chip receiver 11 can be attached or detached by simple operation of the clips 18, and it is possible to provide the attaching structure which is excellent in usability. Of course, there is no anxiety of losing components. Moreover, because the retaining board 4 is clamped at the side faces, it is possible to attach the chip receiver irrespective of a fixing structure of the blade section 3, and this attaching structure can be employed in the hedge trimmer of different types.

Particularly, in this embodiment, the chamfered parts 27, 28 are provided on the corner parts of the retaining board 4 and the lower ends of the clip 18, for the purpose of guiding the lower ends of the clip 18 so as to spread, when the corner parts of the retaining board 4 and the lower ends of the clip 18 come into contact with each other. Therefore, on occasion of attaching the chip receiver 11, there is no necessity of operating the clip 18 to spread, and the chip receiver 11 can be attached with a single operation. As a results, attaching operation is further simplified, and usability is enhanced.

It is to be noted that both of the locking pieces of the clip need not be elastically engaged, but one of the locking pieces may be fixed to the attaching part of the chip receiver, while only the other locking piece may be imparted with elasticity to clamp the retaining board. Moreover, the chamfered parts of the retaining board can be omitted, because it is possible to guide the spread only with the chamfered parts of the clip. On the contrary, the chamfered parts may be provided only on the retaining board, and the chamfered parts on the clip may be omitted.

Further, the structure can be appropriately modified in design, for example, by increasing the number of the clips, by providing intermittent recesses instead of the locking grooves of the retaining board, and so on.

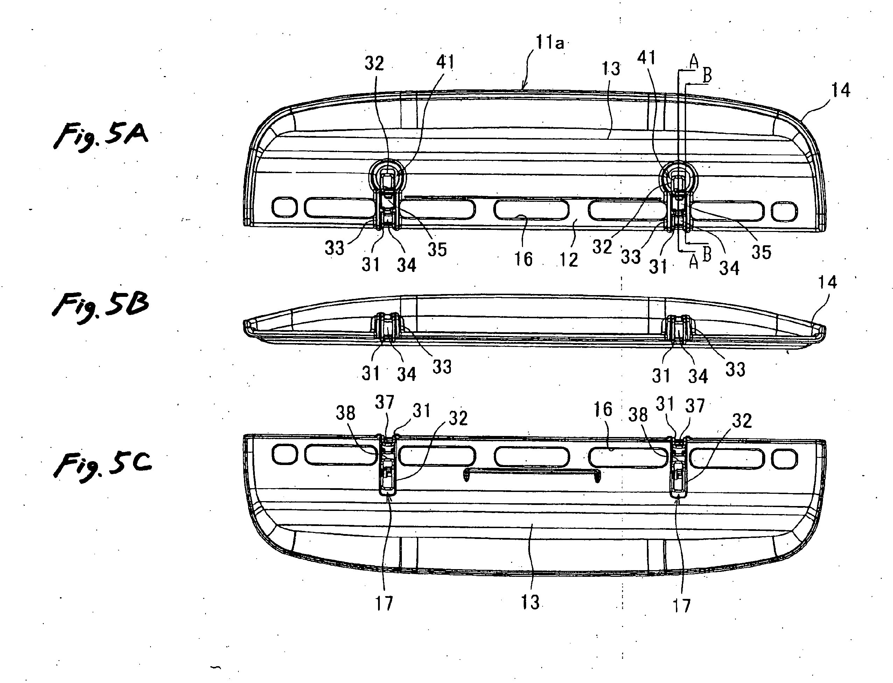

The clip is not limited to the molded product of synthetic resin as in the first embodiment, but may be formed of a leaf spring or wire member of metal. As a second embodiment, Figs. 5A to 5C show a chip receiver 11 a which is provided with a clip 30 formed of wire member, in a plan view, in a front view, and in a bottom view, from above.

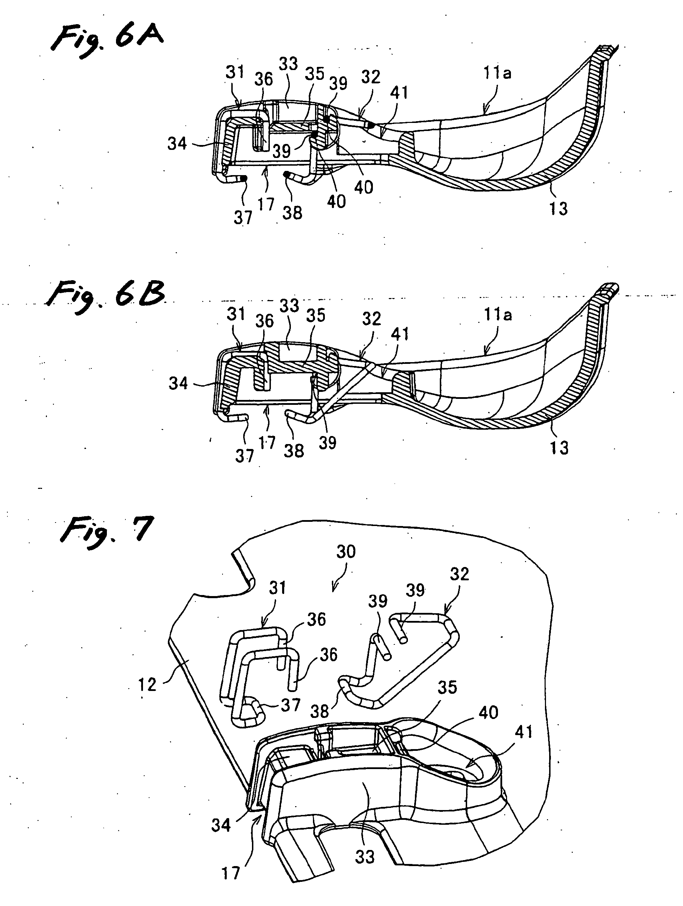

As shown in Figs. 6A through 7, the clip 30 in this embodiment includes a first hook 31 and a second hook 32 which are formed by folding a piece of wire member made of steel. The two hooks 31, 32 are respectively held on a first holder 34 and a second holder 35 which are provided between partition walls 33 uprightly provided on a circumferential edge of the groove 17. The first hook 31 is formed by folding a piece of wire member to form a first U-shape portion 37 at its center, and by extending both side portions in parallel. The two portions in parallel are folded in a quadrangle shape so as to extend along an outer face of the first holder 34 which has an L-shape in cross section, and a pair of free ends 36 in an upper position are inserted between the first and second holders 34, 35 to be hung downward, while the first U-shape portion 37 at the center in a lower position is projected toward the receiving part 13, below the first holder 34, thereby to serve as a locking hook.

The second hook 32 is formed by folding a piece of wire member to form a second U-shape portion 38 at its lower end, which is opposed to the first U-shape portion 37 of the first hook 31. The second hook 32 is not symmetrical in the front-rear direction unlike the first hook 31, but one side edge is inclined upward so as to become highest at the center in the left-right direction, and a pair of free ends 39 are folded in parallel in the longitudinal direction, at a higher position than the other edge. These free ends 39 are respectively inserted into supporting grooves 40 which are formed in an end area of the second holder 35 at two different levels, whereby the second hook 32 is held in an inclined posture in a state where the second U-shape portion 38 is positioned below the second holder 35 to be opposed to the first U-shape portion 37 of the first hook 31, while the opposite end is located in an upper area in an end part 41 having a round shape in a plan view which is formed by the partition walls 33 and has a larger width than a width of the groove 17. In this state, a distance between the first U-shape portion 37 and the second U-shape portion 38 is set to be rather smaller than the width of the retaining board 4 of the hedge trimmer 1. When the upper end of the second hook 32 is lifted from this state with fingers, the second hook 32 is rotated so that the second U-shape portion 38 can be separated from the first U-shape portion 37 thereby to enlarge a distance between them. When the fingers are detached from the upper end, the hook 32 is returned to the original position by elasticity.

In order to attach the chip receiver 11a having the above described structure to the retaining board 4 of the hedge trimmer 1, the upper end of the second hook 32 is lifted with fingers, whereby the second U-shape portion 38 moves away from the first U-shape portion 37 of the first hook 31 and the distance between them becomes larger than the width of the retaining board. Then, the attaching part 12 is set on the retaining board 4, while the first U-shape portion 37 of the first hook 31 in this state is engaged with one of the locking grooves 26, and the fingers are detached from the upper end of the second hook 32, whereby the second U-shape portion 38 of the second hook 32 is elastically engaged with the other locking groove 26 thereby to clamp the retaining board 4. In this manner, attaching of the chip receiver 11 a can be performed.

In order to detach the chip receiver 11a, the upper end of the second hook 32 is lifted with fingers to disengage the second U-shape portion 38 from the locking groove 26, and thereafter, the chip receiver 11 a may be inclined in a manner of lifting the relevant side, whereby the first U-shape portion 37 of the first hook 31 can be disengaged from the other locking groove 26.

As described above, also in the chip receiver 11 a in this embodiment, it is possible to attach the chip receiver 11 a to the blade section 3 by clamping the retaining board 4 with the clip 30. Therefore, the chip receiver 11a can be attached or detached by simple operation of the clip 30, and usability is enhanced. Moreover, there occurs no anxiety of losing components. Further, because the retaining board 4 is clamped at the side faces, it is possible to attach the chip receiver 11a irrespective of the fixing structure of the blade section 3, and this attaching structure can be employed in the hedge trimmer of different types.

Further, in this embodiment, the clip 30 can be easily formed of steel wire, and because the upper end of the second hook 32 is protected by the end part 41 of the partition walls 33, there is no anxiety of accidental drop of the clip. Moreover, the end part 41 is formed in a round shape and larger than the width of the groove 17, which facilitates operation of the upper end of the second hook 32 with the fingers.

In this embodiment, the first hook 31 is positioned on the side edge of the attaching part 12, while the second hook 32 is positioned at a side adjacent to the receiving part 13. However, their positions may be exchanged. Moreover, although only the second hook 32 is elastically engaged with the locking groove 26, the first hook 31 may be also imparted with elasticity having the same structure, so that the two hooks may be nipped with fingers to be spread.

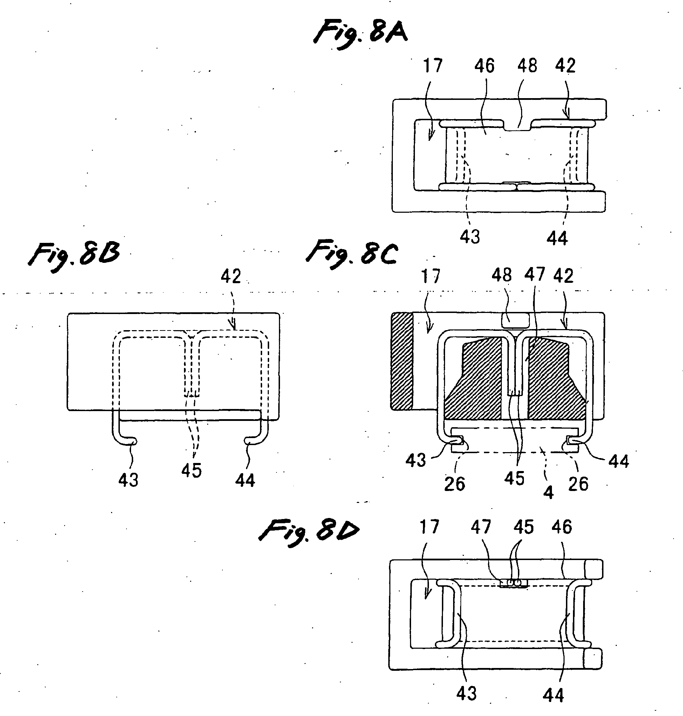

The clip is not limited to a structure including the two hooks, but can be formed of a single piece of wire member. Figs. 8A to 8D show such a clip according to a third embodiment of the invention. This clip 42 is formed by folding a single piece of steel wire into a symmetrical block shape having a first U-shape portion 43 and a second U-shape portion 44 at its lower end. A pair of free ends 45 which are extended downward from a center of an upper edge are inserted into a fixing hole 47 which is formed in a positioning part 46 suspended inside the groove 17, so as to embrace the positioning part 46. Denoted with numeral 48 is a retaining projection which is projected from an inner wall of the groove 17 to be locked to an upper edge at an opposite side to the free ends 45.

In this embodiment, the chip receiver is inclined to allow the second U-shape portion 44 to be engaged with one of the locking grooves 26 of the retaining board 4, and in this state, the chip receiver is pulled toward the other side. Then, the second U-shape portion 44 is flexed outward so as to move away from the positioning part 46, and a distance between the first and second U-shape portions 43, 44 can be enlarged. Thereafter, the chip receiver in the pulled state is returned horizontally to be set on the retaining board 4, and the pulled state is released, whereby the first U-shape portion 43 is engaged with the other locking groove 26 by elastic return of the clip 42 thereby to clamp the retaining board 4. In case of detaching the chip receiver, in a reverse order, the chip receiver is pulled to disengage the first U-shape portion 43 from the locking groove 26, and the chip receiver is inclined by lifting the relevant side upward to release the pulled state, whereby the second U-shape portion 44 can be disengaged from the other locking groove 26.

Also in this embodiment, the chip receiver can be attached to the blade section 3 by clamping the retaining board 4 with the clip 42, and the same effect as in the second embodiment can be obtained. Particularly, this embodiment is more advantageous than the second embodiment in economical point of view, because the clip can be formed of a piece of wire member, and the structure of the positioning part can be made simple.

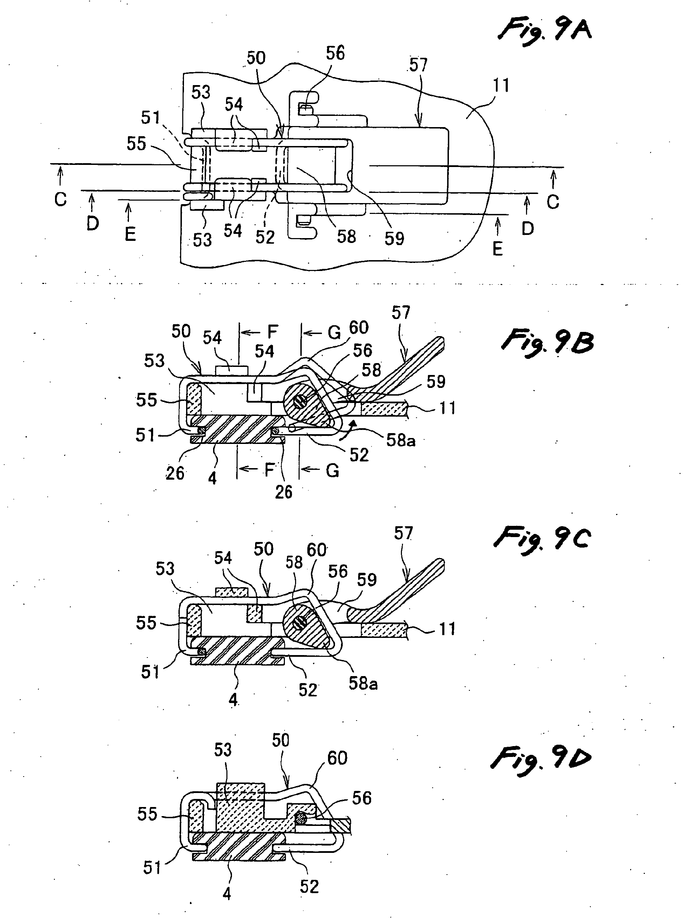

Next, a fourth embodiment of the invention will be described with reference to Fig. 9A to 11. In a clip 50 in this embodiment, a pair of a first U-shape portion 51 and a second U-shape portion 52 to be engaged with the locking grooves 26 of the retaining board 4 are formed of a piece of wire member, in the same manner as in the third embodiment. A middle portion of the clip 50 is held between projections 54 formed between opposed faces of a pair of holding walls 53 which are provided at a determined interval in the longitudinal direction of the chip receiver 11, and the first U-shape portion 51 is held inside a connecting wall 5 which is uprightly provided so as to connect end areas of the holding walls 53.

On the other hand, in end areas of the holding walls 53 at an opposite side to the connecting wall 5, a base end of an operating lever 57 is pivotally attached so as to rotate, inside the second U-shape portion 52, about pins 56 extending in the longitudinal direction of the retaining board 4. A cam part 58 of this base end is formed in a cam shape having a projected end 58a which is projected in a radial direction from a pivot center. In a normal position where the operating lever 57 extends along an upper face of the chip receiver 11 as shown in Fig. 9B, the projected end 58a is directed diagonally downward so as to protrude from a back face of the chip receiver 11. In this normal position of the operating lever 57, the second U-shape portion 52 passes through a through hole 59 which is formed in the operating lever 57 in front of the cam part 58 more close to a distal end thereof, and is wound along an outer periphery of the cam part 58 to be engaged with the locking groove 26. Denoted with numeral 60 is a bent portion of the clip 50 which is bent in an angled shape, above the cam part 58.

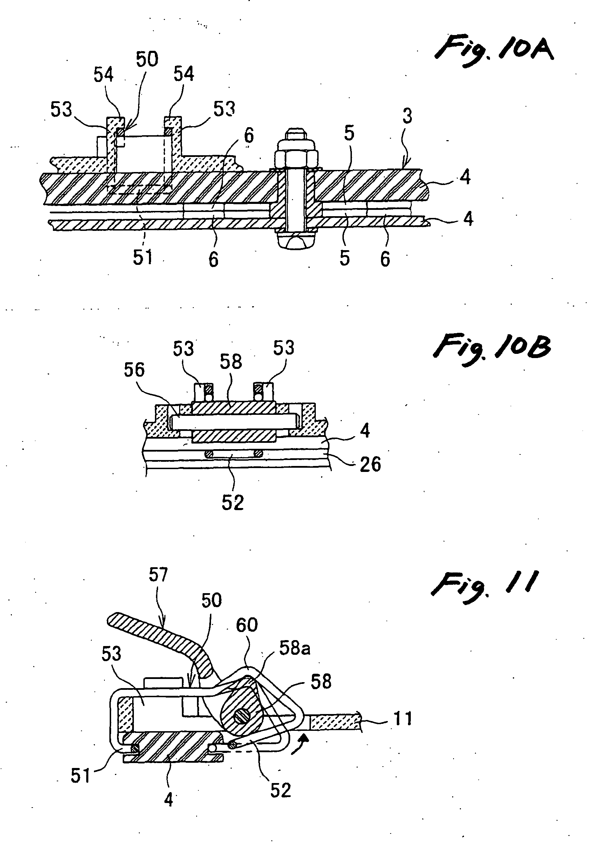

In this embodiment, the operating lever 57 is rotated toward the first U-shape portion 51 so as to be erected from the chip receiver 11 (for the purpose of facilitating this erecting operation, the distal end of the operating lever 57 is formed in an L-shape in such a manner that the operating lever 57 is separated from the upper face of the chip receiver 11 toward the distal end). Then, the projected end 58a of the cam part 58 is rotated while pushing up the clip 50 from inside, against elastic force of the clip 50 in rightward rotation as shown in Fig. 9B, and pulls the second U-shape portion 52 so as to be flexed as shown by arrows in Figs. 9B and 11, thereby to enlarge a distance from the first U-shape portion 51. When the projected end 58a of the cam part 58 has arrived at a position to be engaged with the bent portion 60, the projected end 58a is released from the elastic force of the clip 50 in the rightward rotation, whereby the operating lever 57 is held at an attaching/detaching position as shown in Fig. 11, and the clip 50 is maintained in a spread state. Consequently, the first U-shape portion 51 in this state can be engaged with one of the locking grooves 26 of the retaining board 4. In this manner, attaching or detaching operation can be easily conducted.

On the contrary, when the operating lever 27 is rotated toward the normal position to return the cam part 58 to the inclined state as shown in Fig. 9B, the second U-shape portion 52 is engaged with the other locking groove 26 by elasticity of the clip 50, whereby the retaining board 4 is clamped between the first and second U-shape portions 51, 52, and attaching of the chip receiver 11 is completed.

In order to detach the chip receiver 11, the operating lever 57 is rotated to the attaching/detaching position in the same manner, to disengage the second U-shape portion 52 from the locking groove 26. Thereafter, the chip receiver 11 is inclined by lifting the relevant side, whereby the first U-shape portion 51 is disengaged from the locking groove 26, and the chip receiver 11 can be detached from the blade section 3.

Also in this embodiment, the chip receiver can be attached to the blade section 3 by clamping the retaining board 4 with the clip 50, and the same effect as in the second embodiment can be obtained. Particularly, this embodiment is excellent in operability, because the spreading motion can be easily realized with a small force, by providing the operating lever 57 for spreading the clip 50.

It is to be noted that the cam part of the operating lever is not limited to the above-mentioned shape, but a specific shape of the operating lever can be appropriately modified in design. For example, the operating lever may be formed in a simple plate shape, or pins may be provided integrally on both ends of the cam part, provided that spreading motion of the clip can be realized. Moreover, the operating lever may be provided at a side of the first U-shape portion, or a pair of operating levers may be provided at respective sides of the two U-shape portions, so that the spreading motion of the clip can be obtained by simultaneously nipping a pair of the operating levers to rotate.

Although only some exemplary embodiments of the invention have been described in detail above, those skilled in the art will readily appreciated that many modifications are possible in the exemplary embodiments without materially departing from the novel teachings and advantages of the invention. Accordingly, all such modifications are intended to be included within the scope of the invention as defined in the appended claims.

## Claims

1. A structure for mounting a chip receiver (11) to a blade section (3) extended forward from a main body (2) of a hedge trimmer (1), the structure comprising:
a retaining board (4) for retaining movable blades (5) of the blade section (3), and formed with a pair of locking grooves (26) which are formed on the side faces of the retaining board (4) and extending in a longitudinal direction thereof; and
a clip (18; 30; 42; 50), provided on the chip receiver (11) and adapted to clamp the retaining board (4) by elastically and detachably engaging with the pair of locking grooves (26).

2. The structure as set forth in claim 1, wherein:
the clip (18; 30; 42; 50) includes a pair of clamping members (21, 21; 31, 32; 43, 44; 51, 52) adapted to detachably clamp the retaining board (4); and
at least one of the clamping members (21, 21; 31, 32; 43, 44; 51, 52) is elastically deformable to vary a distance therebetween.

3. The structure as set forth in claim 2, wherein:
the clip (18; 30) has a part adapted to be actuated by a human finger to elastically deform the at least one of the clamping members (21, 21; 31, 32).

4. The structure as set forth in claim 2 or 3, wherein:
the pair of locking grooves is adapted to engage with the clamping members (21, 21; 31, 32; 43, 44; 51, 52).

5. The structure as set forth in any one of claim 2 to 4, wherein:
at least one of the retaining board (4) and the clamping members (21, 21) is provided with at least one chamfered face (28) adapted to assist an elastic deformation of the at least one of the clamping members (21, 21) in such a direction that the distance is enlarged.

6. The structure as set forth in claim 2, wherein:
at least one metal wire having a plurality of bent parts constitutes the clamping members (31, 32; 43, 44; 51, 52).

7. The structure as set forth in claim 6, further comprising:
a lever (57), engaged with one of the bent parts and adapted to be operated to elastically deform the one of the clamping members (51, 52) to vary the distance.

8. The structure as set forth in claim 7, wherein:
the lever (57) is movable between a first position and a second position, and is adapted to be statically placed in either the first position or the second position;
the distance between the clamping members (51, 52) is a first distance adapted to clamp the retaining board (4) when the lever (57) is placed in the first position; and
the distance between the clamping members (51, 52) is a second distance allowing an attachment or detachment of the clip (50) with respect to the retaining board (4).

## Patentansprüche

1. Anordnung zum Montieren einer Spanaufnahme (11) an einen Messerabschnitt (3), der sich nach vorne von einem Hauptkörper (2) einer Heckenschere (1) erstreckt, wobei die Anordnung aufweist:
ein Haltebrett (4) zum Halten von bewegbaren Messern (5) des Messerabschnitts (3), und das mit einem Paar von Verriegelungsnuten (26) gebildet ist, die an den Seitenflächen des Haltebretts (4) gebildet sind und sich in einer Längsrichtung davon erstrecken, und
einen Clip (18; 30; 42; 50), der an der Spanaufnahme (11) vorgesehen ist und zum Klemmen des Haltebretts (4) durch elastisches und lösbares Eingreifen mit dem Paar von Verriegelungsnuten (26) angepasst ist.

2. Anordnung nach Anspruch 1, bei der
der Clip (18; 30; 42; 50) ein Paar von Klemmbauteilen (21, 21; 31, 32; 43, 44; 51, 52) enthält, die zum lösbaren Klemmen des Haltebretts (4) angepasst sind, und
zumindest eines der Klemmbauteile (21, 21; 31, 32; 43, 44; 51, 52) zum Variieren eines Abstandes dazwischen elastisch deformierbar ist.

3. Anordnung nach Anspruch 2, bei der
der Clip (18; 30) einen Teil hat, der zum Betätigen durch einen menschlichen Finger zum elastischen Deformieren des zumindest einen von den Klemmbauteilen (21, 21; 31, 32) angepasst ist.

4. Anordnung nach Anspruch 2 oder 3, bei der
das Paar der Verriegelungsnuten angepasst ist, mit den Klemmbauteilen (21, 21; 31, 32; 43, 44; 51, 52) in Eingriff zu stehen.

5. Anordnung nach einem der Ansprüche 2 bis 4, bei der
zumindest eines von dem Haltebrett (4) und den Klemmbauteilen (21, 21) mit zumindest einer abgeschrägten Fläche versehen ist, die angepasst ist, eine elastische Deformation des zumindest einen von den Klemmbauteilen (21, 21) in solch einer Richtung zu unterstützen, dass der Abstand vergrößert wird.

6. Anordnung nach Anspruch 2, bei der
zumindest ein Metalldraht, der eine Mehrzahl von gebogenen Teilen aufweist, die Klemmbauteile (31, 32; 43, 44; 51, 52) bildet.

7. Anordnung nach Anspruch 6, die weiter aufweist
einen Hebel (57), der mit einem der gebogenen Teile in Eingriff steht und zum elastischen Deformieren des einen von den Klemmbauteilen (51, 52) zum Variieren des Abstands angepasst ist, betätigt zu werden.

8. Anordnung nach Anspruch 7, bei der
ein Hebel (57) zwischen einer ersten Position und einer zweiten Position bewegbar ist und angepasst ist, statisch in einer von der ersten Position oder der zweiten Position platziert zu werden,
der Abstand zwischen den Klemmbauteilen (51, 52) ein erster Abstand ist, der zum Klemmen des Haltebretts (4), wenn der Hebel (57) in der ersten Position platziert ist, angepasste ist, und
der Abstand zwischen den Klemmbauteilen (51, 52) ein zweiter Abstand ist, der eine Befestigung oder Loslösung des Clips (50) mit Bezug auf das Haltebrett (4) ermöglicht.

## Revendications

1. Structure de montage d'un récepteur de déchets (11) sur une section de lames (3) s'étendant en avant d'un corps principal (2) d'un taille-haie (1), la structure comprenant :
une plaque de retenue (4) pour retenir des lames mobiles (5) de la section de lames (3) et formée avec une paire de rainures de blocage (26) qui sont formées sur les faces latérales de la plaque de retenue (4) et s'étendent dans sa direction longitudinale ; et
une attache (18 ; 30 ; 42 ; 50) prévue sur le récepteur de déchets (11) et qui est à même de bloquer la plaque de retenue (4) en s'engageant de manière élastique et détachable sur la paire de rainures de blocage (26).

2. Structure selon la revendication 1, dans laquelle :
l'attache (18 ; 30; 42; 50) une paire d'éléments de serrage (21, 21 ; 21, 32 ; 43, 44 ; 51, 52) qui sont à même de serrer de manière détachable la plaque de retenue (4) ; et
au moins l'un des éléments de serrage (21, 21 ; 31, 32 ; 43, 44 ; 51, 52) peut être déformé de manière élastique pour faire varier la distance entre eux.

3. Structure selon la revendication 2, dans laquelle :
l'attache (18 ; 30) présente une partie qui est à même d'être actionnée par un doigt humain pour déformer de manière élastique le au moins un des éléments de serrage (21, 21 ; 31, 32).

4. Structure selon l'une quelconque des revendications 2 ou 3, dans laquelle :
la paire de rainures de blocage est à même de s'engager sur les éléments de serrage (21, 21 ; 31, 32 ; 43, 44 ; 51, 52).

5. Structure selon l'une quelconque des revendications 2 à 4, dans laquelle :
au moins l'un(e) de la plaque de retenue (4) et des éléments de serrage (21, 21) est pourvu(e) d'au moins une face biseautée (28) qui est à même de favoriser une déformation élastique du au moins un des éléments de serrage (21, 21) dans une direction telle que la distance soit renforcée.

6. Structure selon la revendication 2, dans laquelle :
au moins un fil métallique ayant une pluralité de parties coudées constitue les éléments de serrage (31, 32 ; 43, 44 ; 51, 52).

7. Structure selon la revendication 6, comprenant en outre :
un levier (57) qui s'engage sur l'une des parties coudées et qui est à même de déformer de manière élastique le un des éléments de serrage (51, 52) pour faire varier la distance.

8. Structure selon la revendication 7, dans laquelle :
le levier (57) peut se déplacer entre une première position et une seconde position et est à même de se placer de manière statique dans l'une ou l'autre de la première position et de la seconde position ;
la distance entre les éléments de serrage (51, 52) est une première distance qui est à même de serrer la plaque de retenue (4) lorsque le levier (57) est placé dans la première position ; et
la distance entre les éléments de serrage (51, 52) est une seconde distance permettant une fixation ou un détachement de l'attache par rapport à la plaque de retenue (4).
